# EUROPEAN PATENT SPECIFICATION

(11) **EP 2 772 414 B1**
(45) Date of publication and mention of the grant of the patent: **20.04.2016**
(21) Application number: 14156949.1
(22) Date of filing: 27.02.2014
(51) Int. Cl.: G01C 21/36, G08G 1/16, B62D 15/02

(54) **Parking assistance apparatus and parking method**
Einparkhilfsvorrichtung und Einparkverfahren
Appareil d'assistance au stationnement et procédé de stationnement

(30) Priority: 01.03.2013 GB 201303644
(43) Date of publication of application: 03.09.2014
(73) Proprietor: Nissan Motor Manufacturing (UK) Ltd., Cranfield Bedfordshire MK43 0DB (GB)
(72) Inventor: Church, Christopher, Cranfield, Bedfordshire MK430DB (GB); Linchyk, Alexandra, Cranfield, Bedfordshire MK430DB (GB)

(56) References cited:
- EP-A2- 1 249 379
- EP-A2- 2 444 302
- DE-A1-102006 005 059
- DE-A1-102012 008 858
- US-A1- 2008 009 990
- US-A1- 2012 256 766

## Description

The present invention relates to a parking assistance apparatus; to a method for parking a vehicle; and to a vehicle.

Parking assistance apparatuses for vehicles are known, for assisting a driver to manoeuvre a vehicle into a parking space. In use, the driver drives past a potential parking space; and sensors mounted on the vehicle scan the area in order to determine whether the parking space is sufficiently large to accommodate the vehicle. If the parking space is sufficiently large, the system instructs the driver to position the vehicle at a suitable start position; and calculates a trajectory along which the vehicle must be manoeuvred from the start position in order to position the vehicle within the parking space. The parking assistance apparatus controls operation of the powered steering in order to manoeuvre the vehicle into the parking space.

There are a number of principal parking arrangements including parallel parking, perpendicular parking and angled or echelon parking.

In parallel parking, a vehicle is manoeuvred into a space aligned generally parallel to the direction of travel of the vehicle prior to parking. When parallel parking, the vehicle enters the parking space through one of its longitudinal sides; while other vehicles may be located at both ends of the parking space. The inner side edge of the space is often defined by a kerb; or by some other barrier, e.g. a wall or fence. When parallel parked, vehicles are generally aligned in-line with one another. Parallel parking is most often used along the side of public roads, where the parked vehicle is aligned generally parallel to the kerb.

In perpendicular parking, a vehicle is manoeuvred into a space which is aligned generally perpendicular to the direction of travel of the vehicle prior to parking. When perpendicular parking, the vehicle enters the space through one end; and vehicles or other obstacles may be located on both longitudinal sides of the parking space. In perpendicular parking, parked vehicles are aligned side-by-side. Perpendicular parking is sometimes found along the side of a public road, but is also used in car parks (parking lots); and in other designated parking areas in which parking bays are defined by markings on the ground. The parking bays are typically arranged in rows, with an aisle between adjacent rows; along which vehicles can be driven to enter or leave a parking bay.

Angled parking, sometimes also referred to as echelon parking, is very similar to perpendicular parking; except that the parking spaces are angled relative to the aisle or road, rather than being perpendicular. With angled parking, the parked vehicles are aligned generally side by side; and similar considerations to those that arise in relation to perpendicular parking apply.

In some circumstances, the available parking space can be narrow; and can be defined on either side by objects such as vehicles, walls, kerbs, etc. For persons having limited mobility, getting into and out of a parked vehicle can be difficult; since there is often not sufficient space between the vehicle and adjacent objects to fully open the vehicle door. This is a particular problem for disabled persons, for example those persons who access the vehicle from a wheelchair. It is also a problem for elderly persons who have reduced mobility.

Good access to the vehicle is also required when it is necessary to load articles into, or remove articles from, a vehicle. In these circumstances, additional space may be required in order to open the vehicle door sufficiently wide to remove, for example, a bulky article. Similarly, it is often desirable to have good access to the vehicle's boot (trunk) in order to load and remove goods therefrom; or to the bonnet (hood) to perform maintenance.

Some prior art parking assistance systems allow adjustment of the desired parking position from side to side and/or fore and aft (laterally and longitudinally), but require this input to be made for each parking manoeuvre. The parking offset required may be shown on driver operated controls or displays as bars or steps, which may not give a clear message to the driver. Furthermore, the parking offset input may have to be made by repeated operation of driver controls. This will inevitably cause delay in parking, which may annoy other motorists who are being held up by the vehicle which is being programmed to park itself. Furthermore, different users of the same vehicle may have different parking preferences, which have to be programmed in each time the vehicle is parked.

EP 2 444 302 A2 proposes a parking assistance apparatus and method configured so as to be capable of positioning a vehicle laterally and/or longitudinally offset within a parking space, but which has a simplified method for inputting required offset parameters. In the apparatus as disclosed in EP 2 444 302 A2, an interface enables the user to input a value that represents the extent to which the vehicle is offset from a central longitudinal and/or lateral axis of the parking space. To further assist a driver in quickly selecting an appropriate offset, EP 2 444 302 A2 proposes an apparatus in which one or more predefined offset parking positions can be stored in a memory and recalled. This enables a user to select from a number of predefined offset positions which can be stored as operating or parking modes for ease of retrieval by a user. The user can select one of the parking modes as a default where a particular offset is used frequently, thus avoiding the need to set an offset individually for each parking manoeuvre. A number of standard predefined parking modes may be programmed into the system; but it is also possible to store at least one personalized offset parking mode.

The apparatus and method disclosed in EP 2 444 302 A2 simplify the process of selecting an offset parking position, especially where a user wishes to apply the same offset frequently. However, the arrangements in EP 2 444 302 A2 have shortcomings. Whilst a user may wish to apply a predefined offset when parking in a primary location, for example when parking in a garage at home, they may not wish to use the same offset when parking elsewhere, for example at work or at a supermarket. Accordingly, setting a predefined offset as a default mode may not always be particularly advantageous as it would have to be de-selected when not parking at the primary location. Furthermore, the ability to select a predefined offset as a default mode may not be particularly advantageous to significant numbers of drivers who do not usually require a particular parking offset but who may nevertheless wish to park in an offset manner and/or in a particular orientation on occasions, such as when shopping; and when access to the boot and/or increased access to one side of the vehicle is desirable.

US 2012/256,766A1, considered as being the closest prior art according to the preamble of claim 1, discloses a park assist system which uses GPS data to confirm that an apparently clear parking space is valid for parking, and is not prohibited from use by parking restrictions.

Accordingly, the present invention seeks to mitigate at least one of the aforesaid problems.

In accordance with a first aspect of the invention, there is provided a parking assistance apparatus for a vehicle, as defined in claim 1.

Further optional features of the first aspect are set out in the claims dependent on claim 1.

In accordance with a second aspect of the invention, there is provided a method of parking a vehicle having a parking assistance apparatus, as defined in claim 8. Further optional features of the second aspect of the invention are set out in the claims dependent on claim 8.

In accordance with a third aspect of the invention, there is provided a vehicle having parking assistance apparatus in accordance with the first aspect and/or adapted to carry out the method of the second aspect, as defined in claim 15.

An embodiment of the invention will now be described, by way of example only, with reference to the accompanying drawings, in which:
Figure 1a is a schematic view of a first embodiment of the invention;
Figure 1b is a schematic view of part of a known control system including a human machine interface for user selections;
Figure 2 is a flow diagram of a known parking method;
Figure 3 illustrates the movement of a vehicle into a conventional, perpendicular to kerb parking space when undertaking the method shown in Figure 2;
Figure 4 illustrates the movement of a vehicle into an angled parking space when undertaking the method shown in Figure 2;
Figure 5a shows a known alternative interface for making user selections, said alternative interface including a touch sensitive screen;
Figure 5b shows an enlarged view of a first input mode for the user interface of Figure 5a, which enables a user to select the extent of lateral offset positioning required;
Figure 6a shows the position of the vehicle when positioned centrally within a parking space after having performed a parallel parking manoeuvre;
Figure 6b shows the position of the vehicle when it is positioned longitudinally offset from a lateral axis of the parking space after having performed a parallel parking manoeuvre;
Figure 7 shows an enlarged view of a known second input mode for the user interface of Figure 5a, which enables a user to select the extent of longitudinal offset positioning required;
Figures 8 to 10 show views of three further input modes according to the invention, in which a predefined parking mode is offered to a driver for selection when a parking manoeuvre is initiated at a particular geographical location; and
Figure 11 is a flow diagram of a parking method in accordance with the invention.

An embodiment of the invention will now be described with reference to a vehicle having a parking assistance apparatus.

However, the present invention is not limited to application with this type of parking assistance apparatus; but can be applied to a range of different parking assistance apparatuses, as will be clear to those skilled in the art.

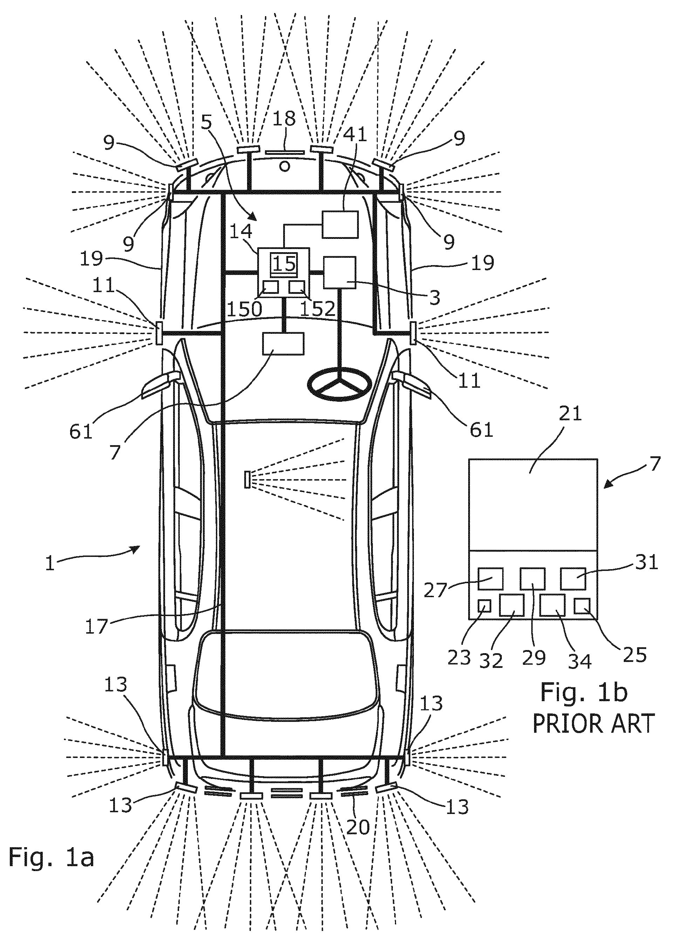

Figure 1a shows a vehicle 1 in the form of a car including an electric power steering device 3, a parking assistance apparatus 5 which includes a human machine interface (HMI) 7, front sensors 9, side sensors 11, and rear sensors 13 and a control system 14 including a processing device 15. The sensors 9, 11, 13 are connected to the processing device 15 via a high speed CANbus 17. The control system 14 also comprises a memory 150.

The HMI 7 includes a display 21, a speaker 23, an on/off switch 25, and a number of parking mode switches which include a passenger side offset switch 27, a central positioning switch 29, a driver side offset switch 31, a forward offset switch 32 and a rearward offset switch 34. The parking mode switches enable the user to select one of a number of predefined parking modes stored in the memory 150, including central parking and both lateral and longitudinal offset parking positions.

The front and rear sensors 9, 13 are located in apertures formed in the front and rear bumpers 18, 20 respectively. The front and rear sensors 9, 13 are proximity sensors for detecting nearby objects at a low level. The sensors are typically ultrasonic sensors that are arranged to measure the time taken for each sound pulse to be reflected back to the receiver. The processing device 15 receives inputs from the front and rear sensors 9, 13 via the CANbus 17. The processing device 15 determines the distance to the nearby objects; and provides feedback to the user, which feedback indicates the distance between the vehicle 1 and the objects. The processing device 15 sends signals to the speaker 23 to provide audible feedback, typically in the form of a series of beeps and/or tones, which increase in frequency as the distance between the vehicle 1 and the objects decreases. A continuous tone is emitted when the distance between the vehicle 1 and the objects is less than a predetermined minimum. Optionally, the processing device 15 can provide distance feedback via the display 21.

The front and rear sensors 9, 13 include at least one sensor 9, 13 located at each corner of the vehicle to improve the accuracy of detection around those parts of the vehicle 1, and to improve the accuracy of the parking manoeuvre.

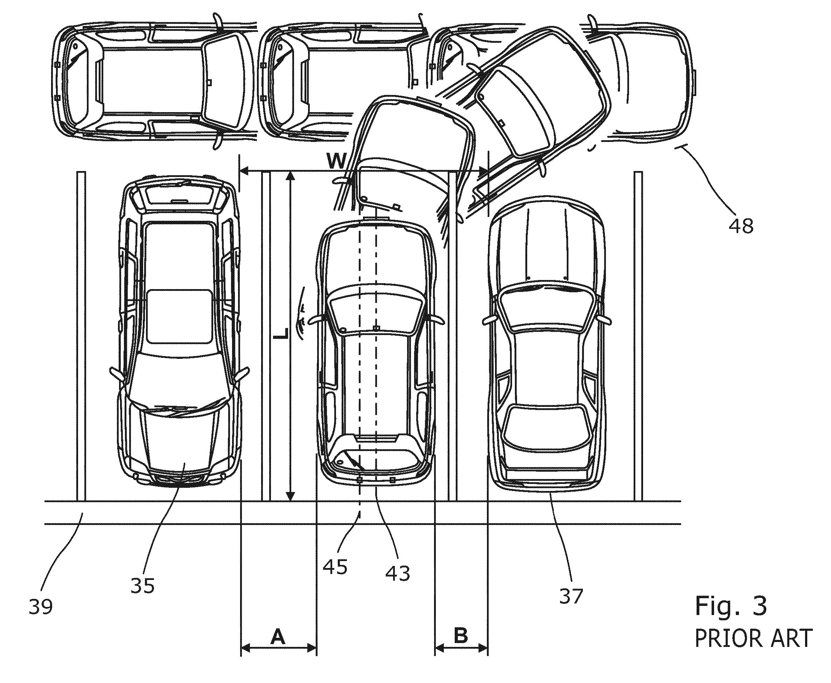

The side sensors 11 are mounted in the front wings 19 of the vehicle. The side sensors 11 are ultrasonic sensors that are arranged to measure the time taken for each sound pulse to be reflected back to their receivers from adjacent objects that define the parking space. For example, the side sensors 11 can detect adjacent vehicles, walls, fences, barriers, kerbs and/or white lines on the road surface. The side sensors 11 take readings of the parking space as the vehicle 1 drives past the parking space (see Figure 3). Readings from the side sensors 11 and from a vehicle speed sensor 41 are communicated to the processing device 15 via the CANbus 17. The processing device determines the size of the parking space available, from the signals received from the side sensors 11 and from the speed sensor 41.

The processing device 15 determines whether a perpendicular, angled, or parallel parking manoeuvre is required, according to the signals received from the side and speed sensors 11, 41.

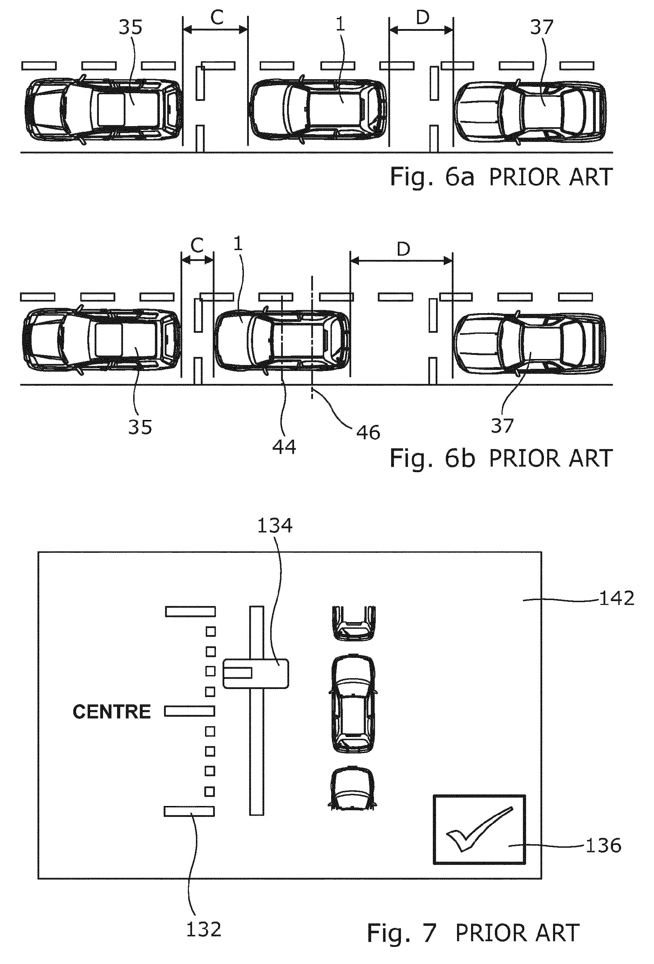

In Figure 3, the parking space is bounded by first and second adjacent vehicles 35, 37 and a kerb 39. The distance between the first and second vehicles 35, 37 defines the width W of the parking space; while the position of the kerb 39 defines the length L of the parking space. The parking space has a longitudinal mid-line 45, which is arranged substantially perpendicular to the road 48 for a regular perpendicular parking manoeuvre, and a lateral mid-line (not shown) that is arranged substantially perpendicular to the longitudinal mid-line. The longitudinal mid-line is arranged substantially parallel to the road 48 when a parallel parking situation arises, and the lateral mid-line 46 (see Figure 6b) is arranged substantially perpendicular thereto.

The side sensors 11 on both sides of the vehicle 1 operate simultaneously. The driver indicates to the parking assistance apparatus 5 which side of the road he wants to park the vehicle on by actuating an indicator switch or by making an input via the HMI 7.

The processing device 15 determines a pathway along which the vehicle 1 is to be moved to position the vehicle in the parking space from the data relating to the size and orientation of the parking space, and a known start position. The processing device generates control signals for the electric power steering device 3 to steer the vehicle along the predetermined pathway to the parking position selected by the user. The driver is able to select from passenger side and driver side lateral offset positions, a central position, and forward and reverse longitudinal offset positions according to at least one input made via the parking mode switches 27, 29, 31, 32, 34. When a lateral offset position is selected (passenger side or driver side), the processing device 15 calculates the pathway along which the vehicle is to be moved such that, in its parked position, the longitudinal mid-line 43 of the vehicle 1 is laterally offset from the longitudinal midline 45 of the parking space (see Figure 3). The effect of this is that the distance A between the vehicle 1 and the first vehicle 35 is different from the distance B between the vehicle 1 and the second vehicle 37. Thus the vehicle 1 is non-centrally positioned along the width dimension of the parking space. The vehicle 1 is positioned closer to the first vehicle 35 when the passenger side offset switch 27 is selected (for a right hand drive vehicle), and is positioned closer to the second vehicle 37 when the driver side offset switch 31 is selected (for a right hand drive vehicle). Thus the driver is able to select a parking position that provides a greater amount of space on either the passenger or driver side of the vehicle, for each parking manoeuvre, in order to improve access to that side of the vehicle.

Typically, the processing device 15 positions the vehicle 1 within the parking space such that the longitudinal mid-line 43 of the vehicle is arranged substantially parallel to the longitudinal mid-line 45 of the parking space.

When a longitudinal offset position is selected (forward or reverse), the processing device 15 calculates the pathway along which the vehicle is to be moved such that, in its parked position, the transverse mid-line of the vehicle 44 is longitudinally offset from the transverse mid-line 46 of the parking space (see Figure 6b). The effect of this is that the distance C between the vehicle 1 and the first vehicle 35 is different from the distance D between the vehicle 1 and the second vehicle 37. Thus the vehicle 1 is non-centrally positioned along the length dimension of the parking space. This compares with the conventional central positioning, wherein the distance C between the vehicle 1 and the first vehicle 35 is equal to the distance D between the vehicle 1 and the second vehicle 37 (see Figure 6a).

The vehicle 1 is positioned closer to the first vehicle 35 when the forward offset switch 32 is selected, and is positioned closer to the second vehicle 37 when the reverse offset switch 34 is selected. Thus the driver is able to select a parking position that provides a greater amount of space either to the front of the vehicle, for example to provide better access to the bonnet, or to the rear of the vehicle to provide better access to the boot.

Typically, the processing device 15 positions the vehicle 1 within the parking space such that the lateral mid-line of the vehicle 44 is arranged substantially parallel to the lateral mid-line 46 of the parking space.

Optionally, the vehicle can include motorised wing mirrors 61 (Figure 1). The processing device 15 is arranged to control operation of the wing mirrors 61 during a parking manoeuvre. The wing mirrors are individually controllable by the processing device 15. The processing device 15 is programmed to fold in the wing mirror on the side of the vehicle that is parked closest to the adjacent object, to protect it from damage, while leaving the other wing mirror in the normal operating position. This has the advantage that the non-closed mirror is usable by the driver when parking. Optionally, the processing device 15 can be programmed to fold in both mirrors during each parking manoeuvre. Optionally, the HMI 7 can include a control to enable the driver to select between a first operational mode, wherein a single wing mirror 61 is moved to a closed position during parking; and a second operational mode, wherein both wing mirrors 61 are moved to closed positions when parking.

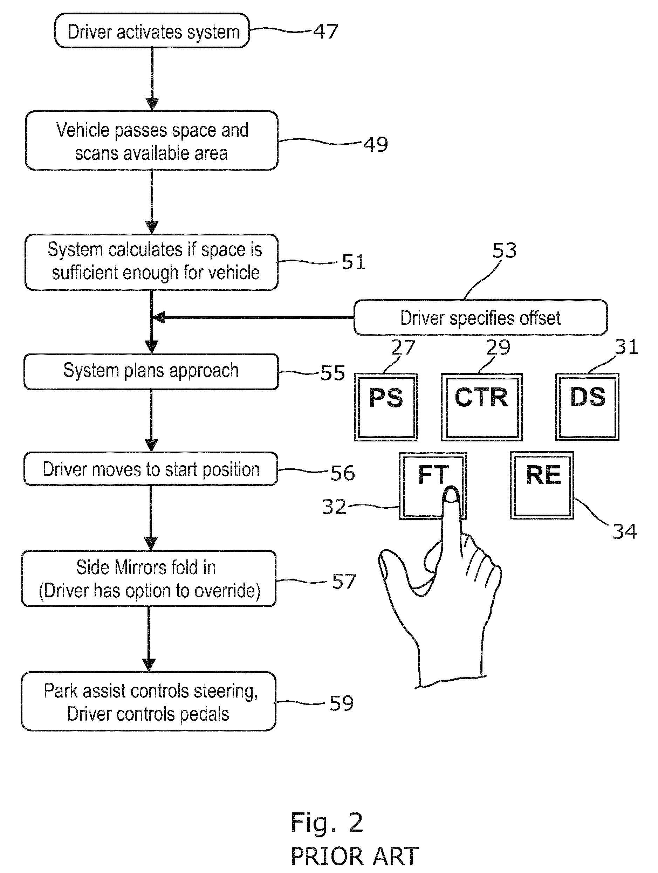

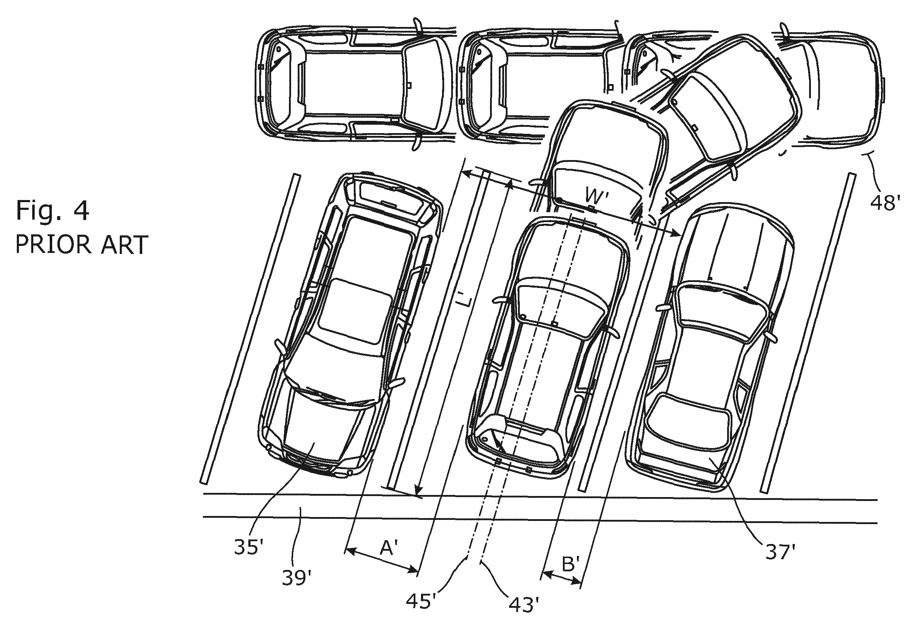

In use, a driver wanting to park the vehicle 1 activates the parking assistance (step 47, Fig. 2) by operating the on/off switch 25 to initiate a parking manoeuvre. This causes the side sensors 11 to scan (step 49) the available area for potential parking spaces. When the vehicle 1 passes a potential parking space, the processing device 15 calculates (step 51) if there is sufficient space for the vehicle 1 to park; and determines the type of parking manoeuvre required. If the processing device 15 determines that sufficient space is available, it indicates this to the driver via the HMI 7, for example via the speaker 23 and/or display 21. The HMI indicates to the driver if the parking manoeuvre is a standard perpendicular parking manoeuvre (see Figure 3), an angled parking manoeuvre (see Figure 4), or a parallel parking manoeuvre (see Figure 6). The driver specifies (step 53) the required position within the parking space by operating at least one of parking mode switches 27, 29, 31, 32, or 34. The processing device 15 determines the pathway (step 55) along which the vehicle 1 needs to move in order to position the vehicle within the parking space according to the position selection made by the driver. The driver stops (step 56) the vehicle and selects reverse (this can be done before or after the user selects the offset function). The processing device 15 sends control signals (step 59) to the steering device 3 to steer the vehicle into the offset position selected by the driver. The driver controls the accelerator and brake during the parking manoeuvre. Optionally, the processing device 15 controls the wing mirrors to fold at least one of them (step 57) inwards, to prevent collisions with the adjacent vehicles 35, 37.

Figure 4 shows a reversing manoeuvre identical to that in Figure 3, except that the parking space is angled to the kerb 39', rather than perpendicular thereto. As the numerals in Figure 4 all have the same meaning as in Figure 3, they are repeated with apostrophes.

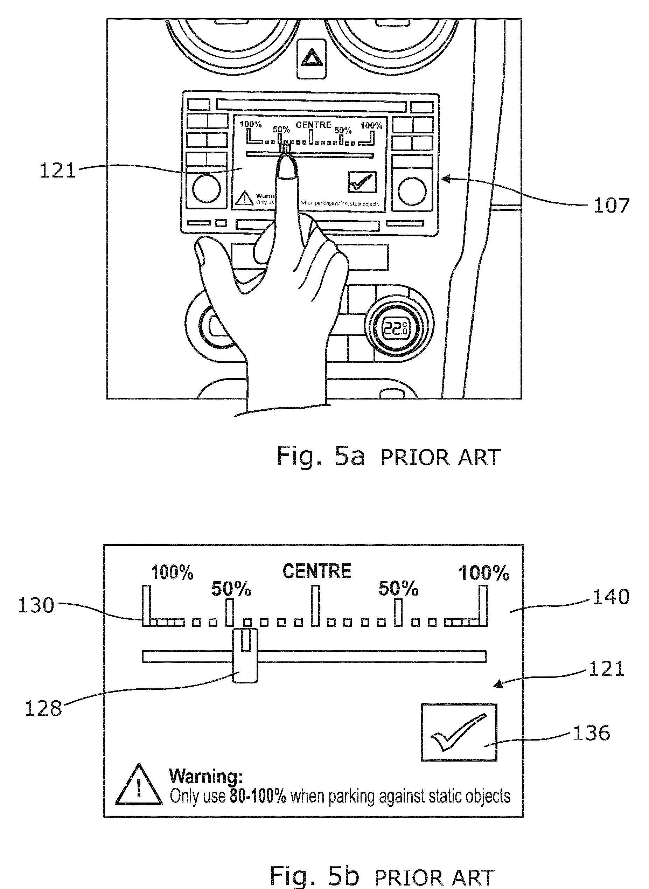

Figure 5a shows an alternative HMI 107. The alternative HMI 107 includes a touch sensitive screen 121 that is arranged to display information to the user about the parking system, including parking instructions and status information. The HMI also includes a speaker, which may provide audible instructions. Touch sensitive screen 121 enables the user to make offset selections by touching appropriate parts of the screen. For example, screen 121 can provide the parking mode selection buttons 25 to 34 as icons on the screen 121. Additionally, or alternatively, HMI 107 can provide the user with a first interactive display 140 (Figure 5b) that enables the user to select the extent of lateral offset required. For example, the user can input the extent of lateral offset positioning by sliding a movable pointer 128 along a scale 130 between minimum and maximum offset positions. The pointer 128 can be arranged to move continuously along the scale or to make discrete steps, for example increasing or decreasing offset positioning by 10% steps. An "accept" icon 136 is provided on the screen so that the user can confirm the pointer 128 position as the required offset position. Preferably, the screen 121 displays a warning message indicating that the last 20% of the offset scale should only be used against static objects such as walls, fences, etc. This enables the drivers of the adjacent vehicles 35, 37 to access their vehicles.

HMI 107 provides the user with a second interactive display 142 for selecting the extent of the longitudinal offset required (Figure 7). The second interactive display 142 is similarly arranged to the first interactive display 140, in that it includes a scale 132, a pointer 134 and an accept button 136, and enables the user to slide the pointer 134 along the scale to select the extent to which the vehicle is longitudinally offset with respect to the lateral mid-line of the parking space.

While the interactive displays 140, 142 have been shown as separate screen shots, it will be apparent to the skilled person that both of the scales 130,132 and pointers 128,134 can be displayed simultaneously to enable the user to make lateral and longitudinal offset inputs via a single screen.

In a first configuration, the HMI 7;107 is arranged such that the user is only permitted to select lateral offset positions when a parallel or angled parking manoeuvre is performed (see Figures 3 and 4) and longitudinal offset positions when a parallel parking manoeuvre is performed (see Figures 6a and 6b). In a second configuration, the HMI 7;107 is arranged such that one of the lateral offset positions or one of the longitudinal offset positions can be selected for perpendicular, angled and parallel parking manoeuvres. In a third configuration, the HMI 7;107 is arranged such that for at least one of perpendicular, angled and parallel parking manoeuvres, and preferably all types of manoeuvre, the user is able to select a lateral offset position and a longitudinal offset position. For example, by setting the lateral offset position such that the driver side is closer to the longitudinal mid-line 45 of the parking space and the longitudinal offset position such that the rear bumper is closer to the lateral mid-line 46 of the parking space, the user can provide additional space for accessing both the driver side and the boot of the vehicle.

It will be appreciated by the skilled person that variants to the above system can be made. For example, any suitable means for sensing a parking space and vehicle speed could be used. In one alternative embodiment, the side sensors 11 are replaced with cameras and the processing device 15 is arranged to interpret pictures received from the cameras in order to determine the size, shape and orientation of the parking space.

At least some of the sensors 9, 11, 13 can be infrared sensors, radar sensors or optical sensors.

The parking assistance apparatus can be arranged to control the speed of the vehicle 1 during a parking manoeuvre.

The HMI 7 can include at least one slide device that is arranged to enable a user to input the extent to which the vehicle is offset from an axis. For example, the slide device can include a setting member that can be moved along a scale, wherein the positions on the scale represent the extent to which the vehicle is offset within the parking space. This is an electro-mechanical version of the scale displayed by the touch sensitive screen 121 in the alternative HMI 107. The HMI 7 can include a first slide device for lateral offset positions and a second scale device for longitudinal offset positions.

The HMI 7; 107 can include +ve and -ve buttons to enable the user to increase and decrease the offset position. These buttons can be provided as graphics on the touch sensitive screen 121.

The HMI 7; 107 can include at least one dial for selecting the extent to which the vehicle is offset from a central position. The dial includes a zero position, which represents a central position in the parking space. Rotating the dial clockwise from the central position increases the offset positioning in a first direction, for example the driver side; while rotating the dial anti-clockwise from the zero position increases the offset positioning in a second direction that is opposite to the first direction, for example the passenger side. Another dial can be included for the forward and reverse offset positions.

The HMI can be arranged to enable a user to type in a value for the extent of offset positioning required; to select between high, medium and low preset offset positions; and/or to make inputs via a menu driven system on the screen 121.

In the above examples, the vehicle 1 is reversed into the parking spaces. However, the control system 14 may be configured to offer the driver the option of selecting a forward parking manoeuvre in order to park the vehicle in a particular orientation. Usually, forward parking would be used with perpendicular or angled parking where the driver prefers to have the vehicle facing inwards, perhaps to ensure unhindered access to the rear of the vehicle, though it could also be used when parallel parking.

As so far described, the vehicle 1 and the parking assistance apparatus 5 is substantially the same as that described in EP 2 444 302 A2. However, in accordance with the present invention, the control system 14 also includes, or is connected with, a GPS unit 152 (Figure 1a), and is configured to enable predefined parking modes to be automatically applied and/or offered to a user as an option when a parking manoeuvre is initiated at a location with which a predefined parking mode is associated by the system. Each predefined parking mode defines a particular position that the vehicle 1 is to occupy within a parking space. Thus each predefined parking mode specifies that the vehicle is to be parked in a central position within the parking space; or in an offset position in either or both of the longitudinal and lateral directions of the parking space. Each predefined parking mode may also specify the orientation with which the vehicle is to be parked in a parking space. This will typically include forward or reverse parking, especially for a perpendicular or an angled parking manoeuvre. The GPS unit may be part of a navigation system of the vehicle.

The control system memory 150 holds one or more local databases containing data identifying the geographical location of points of interest. This data may include latitude/longitude coordinates for each of the points of interest. Typically, the memory 150 will store map data for a particular geographical region, including data relating to the road system of that region and data identifying the geographical location and nature of a number of points of interest within the region such as, but not limited to, retail locations (shopping centres, retail parks, shopping malls, supermarkets and the like), car parks, railway stations, airports, restaurants and the like. Any suitable electronic memory can be used, which may be volatile or non-volatile. In one embodiment, map data including a local database containing data relating to points of interest is stored on an optical disc which is inserted into a disc reader forming part of the control system 14. This allows the map data to be updated on a regular basis by changing the disc, without having to connect the system to a remote server. In addition to the map data, the control system is configured to allow a user to input user defined points of interest, such as a home or work location, and other geographical locations of interest to the user. Typically, these will include locations where the user regularly parks; and for which they may wish to associate a predefined parking offset and/or parking orientation. Data identifying the geographical location of each of the user defined points of interest is saved in the memory.

Data relating to the user defined points of interest may be stored separately from the generalised map data, so that it can be retained when the map data is updated. In one embodiment, the memory 150 includes non-vehicle specific memory in which the map data is stored. This may include an optical disc as discussed above, and a vehicle specific memory in which user input data and other data relating to the particular vehicle is saved. This vehicle specific memory may be permanently fitted in the control system 14 on the vehicle.

The GPS unit 152 receives satellite signals via an antenna, and computes location data for the vehicle in real time. The GPS unit 152 may compute latitude and longitude coordinates identifying the geographical location of the vehicle. Other navigation systems for identifying the location of the vehicle could also be used.

Also stored in the memory are one or more predefined parking modes. Each parking mode contains data for use by the processing device 15 when calculating a pathway along which the vehicle 1 is to be moved to park the vehicle in a parking space in a particular orientation and in a position that is either central within the parking space or offset longitudinally and/or laterally. The predefined parking modes may include standard parking modes that are pre-programmed in the system; such as the standard central, and lateral and longitudinal offset positions described above. The control system 14 is also configured to allow a user to define and save non-standard parking offsets and/or orientation combinations as predefined parking modes using the HMI. User defined parking modes will typically be saved in the vehicle specific memory where one is available.

The control system 14 is configured so that an association can be set between each predefined parking mode and one or more of the geographical points of interest. When an association is created between a parking mode and a specific geographical point of interest, the association may identify the parking mode as a default for the point of interest, or that the parking mode should be offered as an option at that location; or even for that type of location, e.g. allowing access to the boot at retail locations.

In use, when a user initiates a parking manoeuvre, the processing device 15 compares the vehicle location data from the GPS unit 152 with the location data for the points of interest and - if it determines that the vehicle is at a saved point of interest - will check to see if there is a predefined parking mode associated with that location. If a predefined parking mode is set as a default for the point of interest, the processing device 15 will automatically apply the predefined parking mode when determining a pathway along which the vehicle is to be moved in order to position the vehicle within the parking space in the position and/or orientation defined by the associated parking mode. A message indicating that a predefined parking mode is being applied may be displayed via the HMI and the user given the option to deselect it prior to parking. Alternatively, if a predefined parking mode is associated with the location as an option, then the control system is configured to display a message asking if the user wishes to apply the associated parking mode. The user can either select the offered parking mode or reject it using suitable inputs via the HMI. If no predefined parking mode is associated with a location when a parking manoeuvre is initiated, then a conventional centrally positioned parking manoeuvre will be carried out unless the user manually selects an offset and/or a specific orientation, as described above.

Associations may be preset in the system where there is an expectation that a particular parking mode might be useful at certain types of location. In this case, the control system 14 is typically configured so that the associated parking mode is offered to the user as an option for selection when a parking manoeuvre is initiated at a location of that type. For example, when parking at a retail location, such as a supermarket or retail park, it may be desirable to park so as to allow easy access to a boot or trunk of the vehicle. Accordingly, the control system 14 can be configured to offer the user the option to select a predefined parking mode which allows for easier access to the boot when a parking manoeuvre is initiated and the processing device determines that the vehicle is at a retail outlet. More than one predefined parking mode may be associated with each type of point of interest, and the mode offered to the user may be selected dependent on the type of parking manoeuvre that is being undertaken (e.g. parallel, angled, or perpendicular); or on other criteria, as well as the location.

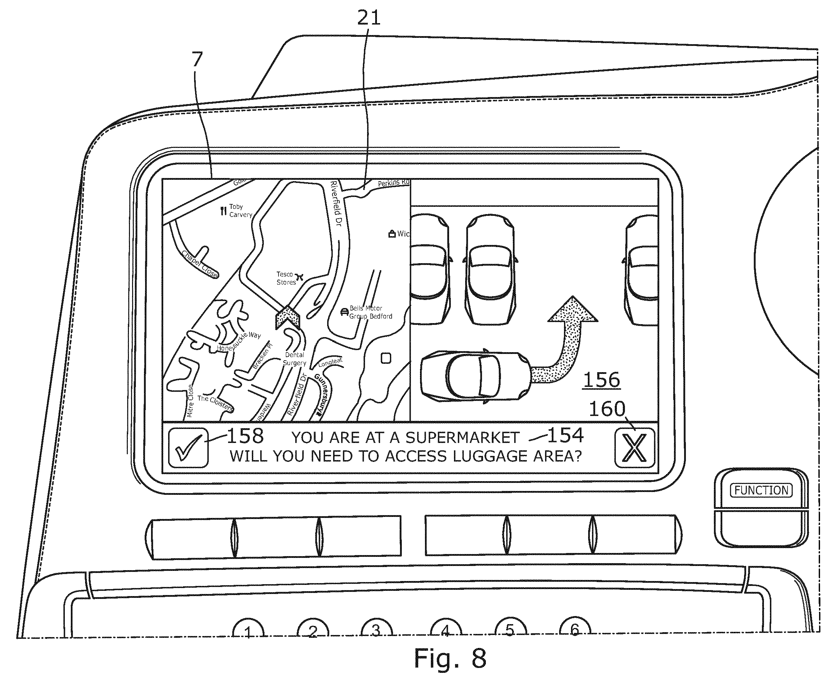

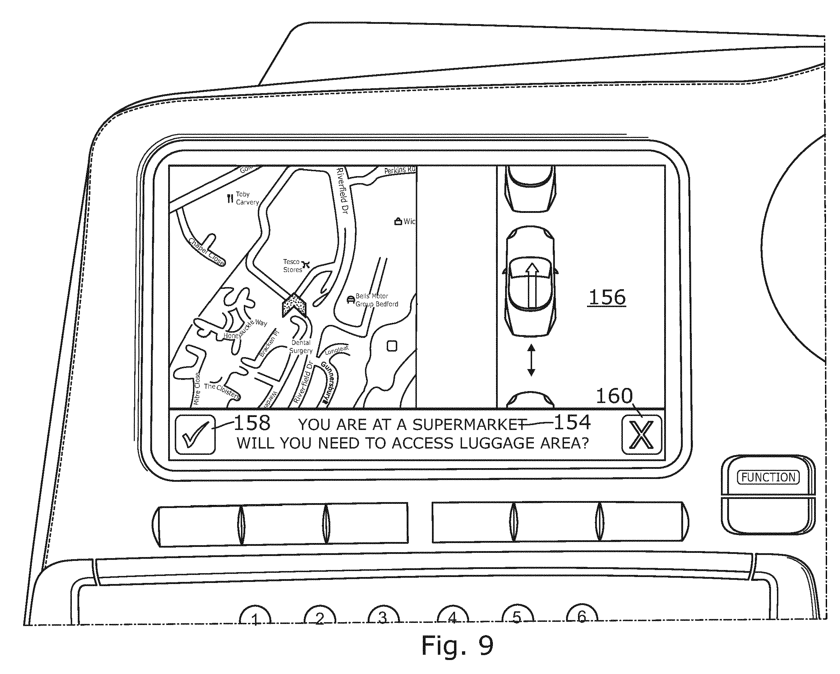

Figure 8 illustrates a typical display provided via a touch screen display 21 forming part of the HMI 7; 107, which could be presented to a user when a perpendicular parking manoeuvre is initiated at a retail outlet such as a supermarket. The display includes a text message 154 asking if access to a rear luggage area is required. A graphic display 156 indicates the option to park forwardly in a perpendicular parking space. The user can accept or reject the offered parking mode by touching one of the icons 158, 160. If the offered parking mode is accepted, the processing device 15 will calculate a required pathway to position the vehicle in the parking space in the indicated orientation. If the vehicle cannot be driven into the parking space in the selected orientation from the position it currently occupies, say because it has driven forwardly past the parking space, the control system may guide the user to position the vehicle at an appropriate start position for the parking manoeuvre. Figure 9 illustrates an alternative display offering the option of a forward offset when a parallel parking manoeuvre is initiated at a retail outlet such as a supermarket.

The control system 14 is also configured to allow the user to set associations between predefined parking modes and points of interest where a user wishes to repeatedly use particular parking modes when parking at certain locations. For example, a user may wish to park with a particular offset and/or orientation when parking at home but with a different offset and/or orientation, or none at all, when parking at work. The user inputs preferences to the system to set up an association through the HMI; the association is then stored in the memory. There are numerous ways in which the user can interact with the system 14 to define points of interest and parking modes, and to set associations between them. In one possible method, when a vehicle is first parked at a particular geographical location using a particular offset and/or orientation, the system may ask the user if they wish to save the offset/orientation as a predefined parking mode for use when parking at that location in the future. If the user answers yes, data regarding the location is stored as a point of interest and data regarding the parking offset/orientation is stored as a predefined parking mode, if these are not already on the system; and an association is set between the two.

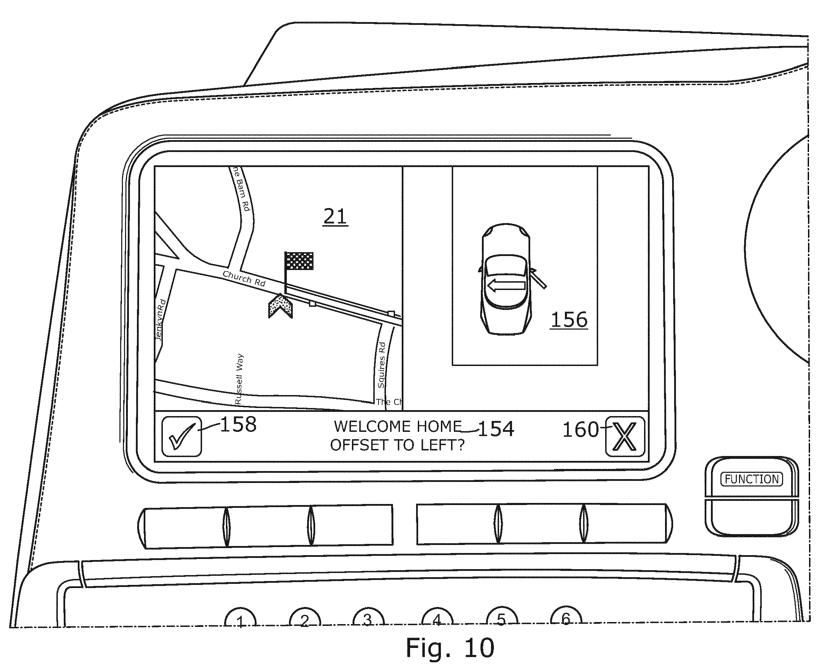

The user may be asked if they wish to set the predefined parking mode as a default for that location. Alternatively, the user may set the predefined parking offset and/or orientation as an optional mode for that location. In this case, when a parking manoeuvre is initiated at that location, the system will ask the user if they wish to use that predefined parking mode, prior to determining a vehicle pathway for assisted parking. Figure 10 illustrates a typical display on a touch screen 21 forming part of the HMI display when the processing device 15 determines that a parking manoeuvre has been initiated at a home location defined as a point of interest and for which a predefined parking mode, including reverse parking with an offset to the left, is associated. The display includes text 154 asking if the left offset is to be applied, a graphic representation 156 of the offered parking mode and icons 158, 160 that can be used to either select or reject the offered parking mode.

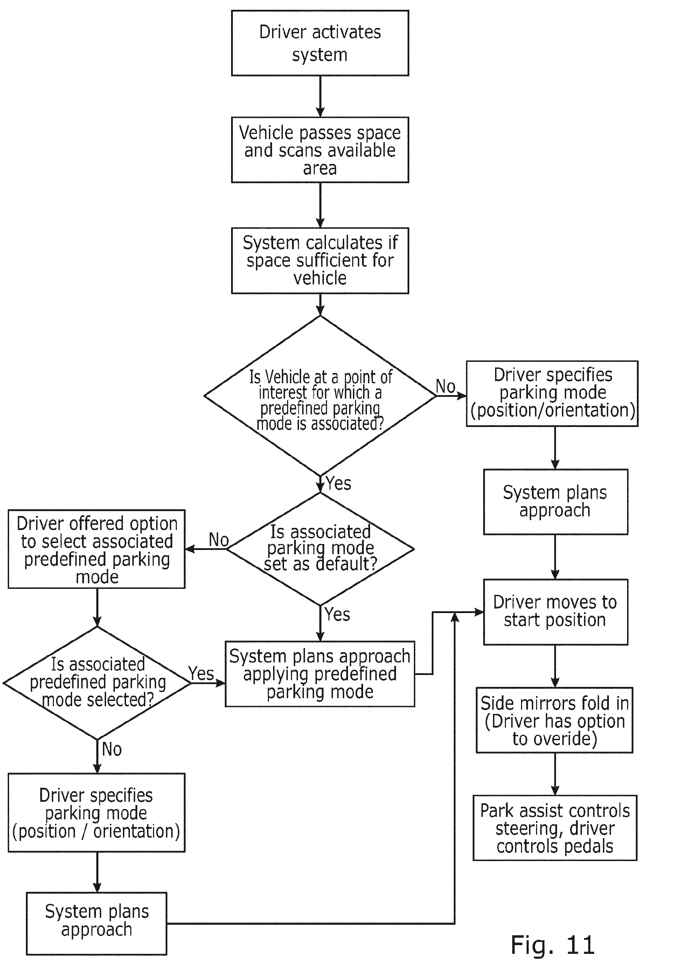

Figure 11 is a flow diagram for the parking method, including the location based retrieval of stored parking modes in which the predefined parking mode is set as a default.

The control system can be configured to store historical data regarding the location of the vehicle and to allow a "post use" association to be created between a predefined parking mode and a point of interest such that the post use associated parking mode is applied when a parking manoeuvre is initiated and the vehicle has travelled from the point of interest. For example, the system 14 may be configured to offer a predefined parking mode that allows easier access to a boot or other rear luggage space when the processing device determines that the vehicle is parking at a location having travelled from a retail location. If a different predefined parking mode is associated with the location at which the parking manoeuvre is initiated, the control system may be configured to offer one or both of the predefined parking modes for use, dependent on a logic sequence.

The control system 14 is configured so that a user can switch off the facility for using predefined parking modes altogether, or to use it only for user defined associations.

The invention provides a very convenient, easy to use and versatile arrangement for allowing a user to select predefined parking offset and/or orientation settings when parking. The apparatus allows different predefined parking modes to be automatically applied at different locations. For example, one parking mode can be set as a default when parking at home; and a different mode set as a default when parking at work. The apparatus can also be configured to offer a user a range of different parking modes that may be of use when parking at different types of locations such as retail locations, airport car parks and the like. As noted previously, the invention is not limited to application with a parking assistance apparatus as described; but can be applied to a range of different parking assistance apparatuses.

## Claims

1. Parking assistance apparatus (5) for a vehicle (1), said apparatus including a control system (14) comprising a processing device (15) configured to determine the size of a parking space according to inputs received from sensing means (11); to determine a pathway along which the vehicle (1) is to be moved in order to position the vehicle within the parking space; and to generate control signals for a vehicle steering device (3) to guide the vehicle (1) along the pathway to a parked position; the apparatus (5) further including a navigation system (152) capable of determining the geographical location of the vehicle (1) and generating data indicative of the vehicle's location; a human machine interface (7, 107) through which information can be provided to a user and through which a user can provide inputs; and a memory (150) containing one or more databases including data identifying the geographical location of points of interest and one or more predefined parking modes, the control system (14) being configured such that the, or each, predefined parking mode stored in the memory (150) can be associated with at least one of the points of interest; the processing device (15) being configured, when a parking manoeuvre is initiated, to determine from a comparison of the vehicle location data and the points of interest location data when the vehicle (1) is at, or has travelled from, a point of interest with which a predefined parking mode is associated; and to apply, or provide the user with the option to select for application, the associated predefined parking mode during the parking manoeuvre; **characterized in that**: said one or more predefined parking mode(s) specify that the vehicle is to be parked in a central position within the parking space; or in an offset position in either or both of the longitudinal and lateral directions of the parking space.

2. Parking assistance apparatus (5) for a vehicle (1) as claimed in claim 1, wherein the control system (14) is configured such that a predefined parking mode stored in the memory (150) can be selected as a default for use at an associated point of interest; the control system (14) being arranged to apply the default predefined parking mode when a parking manoeuvre is initiated at the associated point of interest to determine a pathway along which the vehicle (1) is to be moved in order to position the vehicle within the parking space in the position and/or orientation defined by the parking mode.

3. Parking assistance apparatus (5) for a vehicle (1) as claimed in claim 1 or claim 2, wherein the control system (14) is configured such that a predefined parking mode stored in the memory (150) can be set as an option for use at an associated point of interest; the control system (14) being arranged to offer a user the option to select the optional predefined parking mode when a parking manoeuvre is initiated at the associated point of interest.

4. Parking assistance apparatus (5) for a vehicle (1) as claimed in claim 3, wherein the control system (14) is arranged such that when a predefined parking mode is selected, the processing device (15) determines a pathway along which the vehicle (1) is to be moved in order to position the vehicle within the parking space in the position and/or orientation defined by the selected parking mode; and to generate control signals for a vehicle steering device (3) to guide the vehicle (1) along the pathway.

5. Parking assistance apparatus (5) for a vehicle (1) as claimed in any one of the preceding claims, wherein at least one predefined parking mode is associated with a point of interest at a specific geographical location.

6. Parking assistance apparatus (5) for a vehicle (1) as claimed in any one of the preceding claims, wherein the control system (14) is configured such that more than one predefined parking mode can be associated with any one point of interest, in which case the control system (14) is arranged to offer the user the option to select any one of the predefined parking modes associated with that point of interest.

7. Parking assistance apparatus (5) for a vehicle (1) as claimed in any one of the preceding claims, wherein the control system (14) is configured to store historical data regarding the vehicle's movement; and to allow a post use association to be created between a predefined parking mode and a point of interest for application when a parking manoeuvre is initiated and the vehicle (1) has travelled from the point of interest; and wherein the control system (14) is arranged when a parking manoeuvre is initiated to compare the historical data with the location data for the points of interest and, if it determines that the vehicle (1) has travelled from a point of interest for which a predefined parking mode is associated for post use, to apply, or provide the user with the option to select for application, the post use associated predefined parking mode during the parking manoeuvre.

8. A method of parking a vehicle (1) having a parking assistance apparatus (5) including a control system (14) comprising a processing device (15) configured to determine the size of a parking space according to inputs received from sensing means (11); to determine a pathway along which the vehicle (1) is to be moved in order to position the vehicle within the parking space; and to generate control signals for a vehicle steering device (3) to guide the vehicle (1) along the pathway to a parked position; the method including storing in a memory (150) data identifying the geographical location of at least one point of interest and data defining at least one predefined parking mode; setting an association between at least one parking mode and at least one point of interest; using a navigation system (152) to generate data indicative of the vehicle's location; and, when a parking manoeuvre is initiated, using the processing device (15) to determine from a comparison of the vehicle location data and the points of interest location data when the vehicle (1) is at, or has travelled from, a point of interest with which a predefined parking mode is associated; and applying, or providing a user with the option to select for application, the associated predefined parking mode during the parking manoeuvre; **characterized in that** said at least one predefined parking mode specifies that the vehicle is to be parked in a central position within the parking space; or in an offset position in either or both of the longitudinal and lateral directions of the parking space.

9. A method as claimed in claim 8, wherein the method comprises setting a predefined parking mode stored in the memory (150) as a default for use at an associated point of interest; and automatically applying the default predefined parking mode when a parking manoeuvre is initiated at the associated point of interest to determine a pathway along which the vehicle (1) is to be moved in order to position the vehicle within the parking space in the position and/or orientation defined by the default parking mode.

10. A method as claimed in claim 8 or claim 9, wherein the method comprises setting a predefined parking mode stored in the memory (150) as an option for use at an associated point of interest; and offering a user the option to select the optional predefined parking mode when a parking manoeuvre is initiated at the associated point of interest.

11. A method as claimed in any one of claims 8 to 10, wherein the method comprises associating at least one predefined parking mode with a point of interest at a specific geographical location.

12. A method as claimed in any one of claims 8 to 11, wherein the method comprises associating more than one predefined parking mode with one point of interest; and, when a parking manoeuvre is initiated at that point of interest, offering the user the option to select any one of the associated predefined parking modes.

13. A method as claimed in any one of claims 8 to 12, wherein the method comprises creating a post application association between a predefined parking mode and a point of interest, for use when a parking manoeuvre is initiated; and the vehicle (1) has travelled from that point of interest to a different location.

14. A method as claimed in claim 13, the method comprising storing historical data regarding the vehicle's location and, when a parking manoeuvre is initiated, comparing the historical vehicle location data with the location data for the points of interest to determine whether the vehicle (1) has travelled from a point of interest with which a predefined parking mode is associated for post application.

15. A vehicle (1) comprising parking assistance apparatus (5) as claimed in any one of claims 1 to 7; or adapted to carry out the method of parking as claimed in any one of claims 8 to 14.

## Patentansprüche

1. Einparkhilfsvorrichtung (5) für ein Fahrzeug (1), wobei die Vorrichtung ein Steuerungssystem (14) enthält, das Folgendes umfasst: ein Verarbeitungsgerät (15), das konfiguriert ist, die Größe einer Parklücke gemäß von Sensormitteln (11) empfangenen Eingängen, zu bestimmen; eine Bahn zu bestimmen, entlang derer das Fahrzeug (1) zu bewegen ist, um das Fahrzeug in der Parklücke zu positionieren; und Steuersignale für eine Fahrzeuglenkvorrichtung (3) zu erzeugen, um das Fahrzeug (1) entlang der Bahn in eine Parkposition zu führen; wobei die Vorrichtung (5) ferner Folgendes enthält: ein Navigationssystem (152), das in er Lage ist, den geographischen Standort des Fahrzeugs (1) zu bestimmen und Daten zu erzeugen, die auf den Fahrzeugstandort hinweisen; eine Mensch-Maschine-Schnittstelle (7, 107), durch die einem Benutzer Informationen bereitgestellt werden können und durch die ein Benutzer Eingaben bereitstellen kann; und einen Speicher (150), der eine oder mehrere Datenbanken beinhaltet, die Daten enthalten, die den geographischen Standort von Orten von Interesse und einen oder mehrere vordefinierte Parkmodi identifizieren, wobei das Steuerungssystem (14) derart konfiguriert ist, dass der oder jeder im Speicher (150) gespeicherte vordefinierte Parkmodus mit wenigstens einem Ort von Interesse verknüpft werden kann; wobei das Verarbeitungsgerät (15) konfiguriert ist, wenn ein Einparkmanöver gestartet wird, durch einen Vergleich der Fahrzeugstandortdaten und der Standortdaten von Orten von Interesse zu bestimmen, wenn das Fahrzeug (1) sich an einem Ort von Interesse, mit dem ein vordefinierter Parkmodus verknüpft ist, befindet oder von diesem hergefahren ist; und die Auswahloption zum Anwenden des verknüpften vordefinierten Parkmodus während des Einparkmanövers anzuwenden oder diese dem Benutzer bereitzustellen; **dadurch gekennzeichnet, dass**: der eine oder die mehreren vordefinierten Parkmodi spezifizieren, dass das Fahrzeug in einer zentralen Position in der Parklücke; oder in einer versetzten Position in einer oder in beiden der Längsrichtung und der Querrichtung der Parklücke geparkt werden soll.

2. Einparkhilfsvorrichtung (5) für ein Fahrzeug (1) nach Anspruch 1, wobei das Steuerungssystem (14) derart konfiguriert ist, dass ein im Speicher (150) gespeicherter vordefinierter Parkmodus als eine Voreinstellung zur Verwendung an einem verknüpften Ort von Interesse ausgewählt werden kann; wobei das Steuerungssystem (14) angeordnet ist, den vordefinierten Voreinstellungs-Parkmodus anzuwenden, wenn ein Einparkmanöver an dem verknüpften Ort von Interesse gestartet wird, um eine Bahn zu bestimmen, entlang derer das Fahrzeug (1) zu bewegen ist, um das Fahrzeug in der Parklücke in der durch den Parkmodus definierten Position und/oder Orientierung zu positionieren.

3. Einparkhilfsvorrichtung (5) für ein Fahrzeug (1) nach Anspruch 1 oder 2, wobei das Steuerungssystem (14) derart konfiguriert ist, dass ein im Speicher (150) gespeicherter vordefinierter Parkmodus als eine Option zur Verwendung an einem verknüpften Ort von Interesse eingestellt werden kann; wobei das Steuerungssystem (14) angeordnet ist, einem Benutzer die Option zu ermöglichen, den optionalen vordefinierten Parkmodus auszuwählen, wenn ein Einparkmanöver an dem verknüpften Ort von Interesse gestartet wird.

4. Einparkhilfsvorrichtung (5) für ein Fahrzeug (1) nach Anspruch 3, wobei das Steuerungssystem (14) derart angeordnet ist, dass, wenn ein vordefinierter Parkmodus ausgewählt ist, das Verarbeitungsgerät (15) eine Bahn bestimmt, entlang derer das Fahrzeug (1) zu bewegen ist, um das Fahrzeug in der Parklücke in der durch den ausgewählten Parkmodus definierten Position und/oder Orientierung zu positionieren; und Steuersignale für eine Fahrzeuglenkvorrichtung (3) zu erzeugen, um das Fahrzeug (1) entlang der Bahn zu führen.

5. Einparkhilfsvorrichtung (5) für ein Fahrzeug (1) nach einem der vorhergehenden Ansprüche, wobei wenigstens ein vordefinierter Parkmodus mit einem Ort von Interesse an einem bestimmten geographischen Standort verknüpft ist.

6. Einparkhilfsvorrichtung (5) für ein Fahrzeug (1) nach einem der vorhergehenden Ansprüche, wobei das Steuerungssystem (14) derart konfiguriert ist, dass mehr als ein vordefinierter Parkmodus mit einem beliebigen Ort von Interesse verknüpft werden kann; in diesem Fall ist das Steuerungssystem (14) angeordnet, dem Benutzer die Option zu ermöglichen, einen beliebigen der vordefinierten Parkmodi, die mit diesem Ort von Interesse verknüpft sind, auszuwählen.

7. Einparkhilfsvorrichtung (5) für ein Fahrzeug (1) nach einem der vorhergehenden Ansprüche, wobei das Steuerungssystem (14) konfiguriert ist, historische Daten in Bezug auf die Bewegung des Fahrzeugs zu speichern; und es zuzulassen, dass eine Nachgebrauchsverknüpfung zwischen einem vordefinierten Parkmodus und einem Ort von Interesse zum Anwenden erzeugt wird, wenn ein Einparkmanöver gestartet wird und das Fahrzeug (1) von dem Ort von Interesse hergefahren ist; und wobei das Steuerungssystem (14) angeordnet ist, wenn ein Einparkmanöver gestartet wird, die historischen Daten mit den Standortdaten für die Orte von Interesse zu vergleichen und, wenn es bestimmt, dass das Fahrzeug (1) von einem Ort von Interesse hergefahren ist, mit dem ein vordefinierter Parkmodus für Nachgebrauch verknüpft ist, die Auswahloption zum Nachgebrauch des verknüpften vordefinierten Parkmodus während des Einparkmanövers anzuwenden oder diese dem Benutzer bereitzustellen.

8. Verfahren zum Parken eines Fahrzeugs (1) mit einer Einparkhilfsvorrichtung (5), die ein Steuerungssystem (14) enthält, das Folgendes umfasst: ein Verarbeitungsgerät (15), das konfiguriert ist, die Größe einer Parklücke gemäß von Sensormitteln (11) empfangenen Eingängen zu bestimmen; eine Bahn zu bestimmen, entlang derer das Fahrzeug (1) zu bewegen ist, um das Fahrzeug in der Parklücke zu positionieren; und Steuersignale für eine Fahrzeuglenkvorrichtung (3) zu erzeugen, um das Fahrzeug (1) entlang der Bahn in eine Parkposition zu führen; wobei das Verfahren Folgendes enthält: das Speichern von Daten, die den geographischen Standort von wenigstens einem Ort von Interesse identifizieren, und von Daten, die wenigstens einen vordefinierten Parkmodus definieren, in einem Speicher (150); das Einstellen einer Verknüpfung zwischen wenigstens einem Parkmodus und wenigstens einem Ort von Interesse; das Verwenden eines Navigationssystems (152), um Daten zu erzeugen, die auf den Fahrzeugstandort hinweisen; und, wenn ein Einparkmanöver gestartet wird, das Verwenden des Verarbeitungsgeräts (15), um durch einen Vergleich der Fahrzeugstandortdaten und der Standortdaten der Orte von Interesse zu bestimmen, wenn das Fahrzeug (1) sich an einem Ort von Interesse, mit dem ein vordefinierter Parkmodus verknüpft ist, befindet oder von diesem hergefahren ist; und das Anwenden der Auswahloption zum Anwenden des verknüpften vordefinierten Parkmodus während des Einparkmanövers oder Bereitstellen von diesem an den Benutzer; **dadurch gekennzeichnet, dass** wenigstens ein vordefinierter Parkmodus spezifiziert, dass das Fahrzeug in einer zentralen Position in der Parklücke; oder in einer versetzten Position in einer oder in beiden der Längsrichtung und Querrichtung der Parklücke geparkt werden soll.

9. Verfahren nach Anspruch 8, wobei das Verfahren Folgendes umfasst: das Einstellen eines im Speicher (150) gespeicherten vordefinierten Parkmodus als eine Voreinstellung zur Verwendung an einem Ort von Interesse; und das automatische Anwenden des vordefinierten Voreinstellungs-Parkmodus, wenn ein Einparkmanöver an dem verknüpften Ort von Interesse gestartet wird, um eine Bahn zu bestimmen, entlang derer das Fahrzeug (1) zu bewegen ist, um das Fahrzeug in der Parklücke in der durch den Voreinstellungs-Parkmodus definierten Position und/oder Orientierung zu positionieren.

10. Verfahren nach Anspruch 8 oder 9, wobei das Verfahren Folgendes umfasst: das Einstellen eines im Speicher (150) gespeicherten vordefinierten Parkmodus als eine Option zur Verwendung an einem verknüpften Ort von Interesse; und das Ermöglichen der Option für einen Benutzer, den optionalen vordefinierten Parkmodus auszuwählen, wenn ein Einparkmanöver an dem verknüpften Ort von Interesse gestartet wird.

11. Verfahren nach einem der Ansprüche 8 bis 10, wobei das Verfahren das Verknüpfen von wenigstens einem vordefinierten Parkmodus mit einem Ort von Interesse an einem bestimmten geographischen Standort umfasst.

12. Verfahren nach einem der Ansprüche 8 bis 11, wobei das Verfahren Folgendes umfasst: das Verknüpfen von mehr als einem vordefinierten Parkmodus mit einem Ort von Interesse; und, wenn ein Einparkmanöver an diesem Ort von Interesse gestartet wird, das Ermöglichen der Option für einen Benutzer, einen beliebigen der verknüpften vordefinierten Parkmodi auszuwählen.

13. Verfahren nach einem der Ansprüche 8 bis 12, wobei das Verfahren das Erzeugen einer Nachanwendungsverknüpfung zwischen einem vordefinierten Parkmodus und einem Ort von Interesse zur Verwendung umfasst, wenn ein Einparkmanöver gestartet wird; und das Fahrzeug (1) von diesem Ort von Interesse zu einem anderen Standort gefahren ist.

14. Verfahren nach Anspruch 13, wobei das Verfahren Folgendes umfasst: das Speichern historischer Daten in Bezug auf den Standort des Fahrzeugs und, wenn ein Einparkmanöver gestartet wird, das Vergleichen der historischen Fahrzeugstandortdaten mit den Standortdaten für die Orte von Interesse, um zu bestimmen, ob das Fahrzeug (1) von einem Ort von Interesse, mit dem ein vordefinierter Parkmodus zur Nachanwendung verknüpft ist, hergefahren ist.

15. Fahrzeug (1), umfassend eine Einparkhilfsvorrichtung (5) nach einem der Ansprüche 1 bis 7; oder angepasst, das Einparkverfahren nach einem der Ansprüche 8 bis 14 auszuführen.

## Revendications

1. Appareil d'aide au stationnement (5) pour un véhicule (1), ledit appareil comportant un système de commande (14) comprenant un dispositif de traitement (15) configuré pour déterminer la taille d'une place de stationnement selon des entrées reçues en provenance d'un moyen de détection (11) ; pour déterminer une voie le long de laquelle le véhicule (1) doit être déplacé afin de positionner le véhicule dans la place de stationnement ; et pour générer des signaux de commande pour un dispositif de direction de véhicule (3) afin de guider le véhicule (1) le long de la voie vers une position de stationnement ; l'appareil (5) comportant en outre un système de navigation (152) pouvant déterminer la localisation géographique du véhicule (1) et générer des données indiquant la localisation du véhicule ; une interface homme-machine (7, 107) par l'intermédiaire de laquelle des informations peuvent être fournies à un utilisateur et par l'intermédiaire de laquelle un utilisateur peut fournir des entrées ; et une mémoire (150) comprenant une ou plusieurs bases de données comportant des données identifiant la localisation géographique de points d'intérêt et un ou plusieurs modes de stationnement prédéfinis, le système de commande (14) étant configuré de sorte que le ou chaque mode de stationnement prédéfini stocké dans la mémoire (150) puisse être associé à au moins l'un des points d'intérêt ; le dispositif de traitement (15) étant configuré, lorsqu'une manoeuvre de stationnement est engagée, pour déterminer à partir d'une comparaison des données de localisation de véhicule et des données de localisation de points d'intérêt le moment où le véhicule (1) se trouve au niveau de, ou a roulé depuis un point d'intérêt auquel est associé un mode de stationnement prédéfini ; et pour appliquer, ou fournir à l'utilisateur l'option consistant à sélectionner pour une application, le mode de stationnement prédéfini associé pendant la manoeuvre de stationnement ; **caractérisé en ce que** : ledit ou lesdits mode(s) de stationnement prédéfini(s) précise(nt) que le véhicule doit être stationné dans une position centrale dans la place de stationnement ; ou dans une position décalée dans l'une ou l'autre des directions longitudinale et latérale ou les deux de la place de stationnement.

2. Appareil d'aide au stationnement (5) pour un véhicule (1) selon la revendication 1, dans lequel le système de commande (14) est configuré de sorte qu'un mode de stationnement prédéfini stocké dans la mémoire (150) puisse être sélectionné par défaut pour être utilisé au niveau d'un point d'intérêt associé ; le système de commande (14) étant conçu pour appliquer le mode de stationnement prédéfini par défaut lorsqu'une manoeuvre de stationnement est engagée au niveau du point d'intérêt associé pour déterminer une voie le long de laquelle le véhicule (1) doit être déplacé afin de positionner le véhicule dans la place de stationnement dans la position et/ou l'orientation définie(s) par le mode de stationnement.

3. Appareil d'aide au stationnement (5) pour un véhicule (1) selon la revendication 1 ou la revendication 2, dans lequel le système de commande (14) est configuré de sorte qu'un mode de stationnement prédéfini stocké dans la mémoire (150) puisse être réglé comme une option pour être utilisé au niveau d'un point d'intérêt associé ; le système de commande (14) étant conçu pour offrir à un utilisateur l'option consistant à sélectionner le mode de stationnement prédéfini facultatif lorsqu'une manoeuvre de stationnement est engagée au niveau du point d'intérêt associé.

4. Appareil d'aide au stationnement (5) pour un véhicule (1) selon la revendication 3, dans lequel le système de commande (14) est conçu de sorte que lorsqu'un mode de stationnement prédéfini est sélectionné, le dispositif de traitement (15) détermine une voie le long de laquelle le véhicule (1) doit être déplacé afin de positionner le véhicule dans la place de stationnement dans la position et/ou l'orientation définie(s) par le mode de stationnement sélectionné ; et générer des signaux de commande pour un dispositif de direction de véhicule (3) afin de guider le véhicule (1) le long de la voie.

5. Appareil d'aide au stationnement (5) pour un véhicule (1) selon l'une quelconque des revendications précédentes, dans lequel au moins un mode de stationnement prédéfini est associé à un point d'intérêt au niveau d'une localisation géographique spécifique.

6. Appareil d'aide au stationnement (5) pour un véhicule (1) selon l'une quelconque des revendications précédentes, dans lequel le système de commande (14) est configuré de sorte que plus d'un mode de stationnement prédéfini puisse être associé à tout point d'intérêt, auquel cas le système de commande (14) est conçu pour offrir à l'utilisateur l'option consistant à sélectionner l'un quelconque des modes de stationnement prédéfinis associés à ce point d'intérêt.

7. Appareil d'aide au stationnement (5) pour un véhicule (1) selon l'une quelconque des revendications précédentes, dans lequel le système de commande (14) est configuré pour stocker des données historiques concernant le déplacement du véhicule ; et pour permettre de créer une association après utilisation entre un mode de stationnement prédéfini et un point d'intérêt pour une application lorsqu'une manoeuvre de stationnement est engagée et que le véhicule (1) a roulé depuis le point d'intérêt ; et dans lequel le système de commande (14) est conçu, lorsqu'une manoeuvre de stationnement est engagée, pour comparer les données historiques aux données de localisation pour les points d'intérêt et, s'il détermine que le véhicule (1) a roulé depuis un point d'intérêt pour lequel un mode de stationnement prédéfini est associé après utilisation, pour appliquer, ou fournir à l'utilisateur l'option consistant à sélectionner pour une application, le mode de stationnement prédéfini associé après utilisation pendant la manoeuvre de stationnement.

8. Procédé de stationnement d'un véhicule (1) doté d'un appareil d'aide au stationnement (5) comportant un système de commande (14) comprenant un dispositif de traitement (15) configuré pour déterminer la taille d'une place de stationnement selon des entrées reçues en provenance d'un moyen de détection (11) ; pour déterminer une voie le long de laquelle le véhicule (1) doit être déplacé afin de positionner le véhicule dans la place de stationnement ; et pour générer des signaux de commande pour un dispositif de direction de véhicule (3) afin de guider le véhicule (1) le long de la voie vers une position stationnée ; le procédé comportant le stockage dans une mémoire (150) de données identifiant la localisation géographique d'au moins un point d'intérêt et de données définissant au moins un mode de stationnement prédéfini ; le réglage d'une association entre au moins un mode de stationnement et au moins un point d'intérêt ; l'utilisation d'un système de navigation (152) pour générer des données indiquant la localisation du véhicule ; et, lorsqu'une manoeuvre de stationnement est engagée, l'utilisation du dispositif de traitement (15) pour déterminer à partir d'une comparaison des données de localisation de véhicule et des données de localisation de points d'intérêt le moment où le véhicule (1) se trouve au niveau de, ou a roulé depuis, un point d'intérêt auquel est associé un mode de stationnement prédéfini ; et l'application, ou la fourniture à un utilisateur de l'option consistant à sélectionner pour une application le mode de stationnement prédéfini associé pendant la manoeuvre de stationnement ; **caractérisé en ce que** ledit au moins un mode de stationnement prédéfini précise que le véhicule doit être stationné dans une position centrale dans la place de stationnement ; ou dans une position décalée dans l'une ou l'autre des directions longitudinale et latérale ou les deux de la place de stationnement.

9. Procédé selon la revendication 8, dans lequel le procédé comprend le réglage d'un mode de stationnement prédéfini stocké dans la mémoire (150) par défaut pour être utilisé au niveau d'un point d'intérêt associé ; et l'application automatique du mode de stationnement prédéfini par défaut lorsqu'une manoeuvre de stationnement est engagée au niveau du point d'intérêt associé pour déterminer une voie le long de laquelle le véhicule (1) doit être déplacé afin de positionner le véhicule dans la place de stationnement dans la position et/ou l'orientation définie(s) par le mode de stationnement par défaut.

10. Procédé selon la revendication 8 ou la revendication 9, dans lequel le procédé comprend le réglage d'un mode de stationnement prédéfini stocké dans la mémoire (150) comme une option à utiliser au niveau d'un point d'intérêt associé ; et le fait d'offrir à un utilisateur l'option consistant à sélectionner le mode de stationnement prédéfini facultatif lorsqu'une manoeuvre de stationnement est engagée au niveau du point d'intérêt associé.

11. Procédé selon l'une quelconque des revendications 8 à 10, dans lequel le procédé comprend l'association d'au moins un mode de stationnement prédéfini à un point d'intérêt au niveau d'une localisation géographique spécifique.

12. Procédé selon l'une quelconque des revendications 8 à 11, dans lequel le procédé comprend l'association de plus d'un mode de stationnement prédéfini à un point d'intérêt ; et, lorsqu'une manoeuvre de stationnement est engagée au niveau de ce point d'intérêt, le fait d'offrir à l'utilisateur l'option consistant à sélectionner l'un quelconque des modes de stationnement prédéfinis associés.

13. Procédé selon l'une quelconque des revendications 8 à 12, dans lequel le procédé comprend la création d'une association après application entre un mode de stationnement prédéfini et un point d'intérêt, à utiliser lorsqu'une manoeuvre de stationnement est engagée ; et que le véhicule (1) a roulé depuis ce point d'intérêt vers une localisation différente.

14. Procédé selon la revendication 13, le procédé comprenant le stockage de données historiques concernant la localisation du véhicule et, lorsqu'une manoeuvre de stationnement est engagée, la comparaison des données historiques de localisation de véhicule aux données de localisation pour les points d'intérêt afin de déterminer si le véhicule (1) a roulé depuis un point d'intérêt auquel est associé un mode de stationnement prédéfini après application.

15. Véhicule (1) comprenant un appareil d'aide au stationnement (5) selon l'une quelconque des revendications 1 à 7 ; ou adapté pour réaliser le procédé de stationnement selon l'une quelconque des revendications 8 à 14.
